Europäisches Patentamt

European Patent Office

Office européen des brevets

(19)

(11) Veröffentlichungsnummer: **0 277 297 B1**

# (12) EUROPÄISCHE PATENTSCHRIFT

(45) Veröffentlichungstag der Patentschrift: **29.01.92**

(51) Int. Cl.⁵: **B65G  47/06**

(21) Anmeldenummer: **87117007.2**

(22) Anmeldetag: **18.11.87**

(54) **Vorrichtung zum Vereinzeln von walzenförmigen Teilen.**

(30) Priorität: **18.11.86 DE 3639370**

(43) Veröffentlichungstag der Anmeldung:
**10.08.88 Patentblatt  88/32**

(45) Bekanntmachung des Hinweises auf die
Patenterteilung:
**29.01.92 Patentblatt  92/05**

(84) Benannte Vertragsstaaten:
**AT CH DE FR GB IT LI NL SE**

(56) Entgegenhaltungen:
**DE-U- 1 838 684**
**DE-U- 1 914 084**
**DE-U- 1 915 469**
**US-A- 3 104 037**

**FERTIGUNGSTECHNIK UND BETRIEB, Band
25, Nr. 9, 1975, Seiten 545-548; S. HESSE
"Einsatz und Auswahl von Magazineinrichtungen"**

(73) Patentinhaber: **FRAUNHOFER-GESELLSCHAFT
ZUR FÖRDERUNG DER ANGEWANDTEN FOR-
SCHUNG E.V.**
**Leonrodstrasse 54**
**W-8000 München 19(DE)**

(72) Erfinder: **Maier, Dieter**
**Weikersheimerstr. 9**
**W-7000 Stuttgart 40(DE)**
Erfinder: **Haarmann, Wolfram**
**Hans-Reyhing-Str. 22**
**W-7410 Reutlingen(DE)**
Erfinder: **Gerle, Angelika**
**Nelkenstr. 8**
**WE-7022 Leinfelden(DE)**

(74) Vertreter: **Münich, Wilhelm, Dr.**
**Kanzlei Münich, Steinmann, Schiller Willibaldstrasse 36/38**
**W-8000 München 21(DE)**

# Beschreibung

Die Erfindung bezieht sich auf eine Vorrichtung zum Vereinzeln von walzenförmigen Teilen, mit einer Austrageinheit, die in einer Begrenzungswand eine Austragöffnung für die Teile und in der anderen Begrenzungswand eine Fördereinrichtung aufweist, deren Transportrichtung zum höchsten Punkt des Behälterbodens gerichtet ist.

Unter walzenförmigen Teilen sollen dabei im folgenden Teile verstanden werden, deren Durchmesser kleiner und insbesondere wesentlich kleiner als die Länge ist.

Vorrichtungen gemäß dem Oberbegriff des Anspruchs 1 sind aus der Zeitschrift "Fertigungstechnik und Betrieb, Band 25, Nr. 9, 1975, Seiten 545 bis 548 oder aus dem deutschen Gebrauchsmuster 1 838 684 bekannt. Bei diesen gattungsgemäßen Vorrichtung ist die Austragöffnung in einem Boden eines Behälters vorgesehen. Den "restlichen Teil" des Boden bildet ein Förderband, dessen Transportrichtung zum höchsten Punkt des Behälterbodens gerichtet ist. Ferner ist bei der aus der erstgenannten Literaturstelle bekannten Vorrichtung - offensichtlich um die Betriebssicherheit zu erhöhen - ein Ableitblech vorgesehen, das die geförderten Teile senkrecht nach unten fallen läßt. Bei der aus der DE-U-1 838 684 bekannten Vorrichtung weist die Austragöffnung direkt nach unten.

Bei diesen bekannten Vorrichtungen wird zwar in der Regel eine Brückenbildung im Bereich der Austragöffnung vermieden, nachteilig ist jedoch, daß insbesondere empfindliche Teile durch den "Sturz aus der vertikal angeordneten Austragöffnung" beispielsweise auf einen weiteren Förderer leicht beschädigt werden können. Darüberhinaus können bei den bekannten gattungsgemäßen Vorrichtungen Betriebssituationen auftreten, in denen eine Brückenbildung nicht verhindert werden kann, da das Förderband nicht im Bereich der Austragöffnung, sondern lediglich im sonstigen Bereich des Behälterbodens vorgesehen ist.

Eine Vorrichtung anderer Gattung ist aus der DE-OS 29 12 510 bekannt. Bei dieser bekannten Vorrichtung sind ein Förderband sowie ein Vereinzelungswalze vorgesehen, um die walzenförmigen Teile aus dem Behälter einzeln auszutragen und "Verstopfungen" der Austragöffnung zu vermeiden. Diese "Verstopfungen" können sich beispielsweise dadurch ergeben, daß ein Teil der "zweiten Teillage" gegen die obere Begrenzung der Austragöffnung gedrückt wird und dem "vordersten" walzenförmigen Teil der untersten Lage den Durchtritt durch die Öffnung "versperrt".

Darüberhinaus ist bei dieser bekannten Vorrichtung ein Kanal vorgesehen, der den Vorschub lediglich eines einzigen Elements zuläßt. Zum Austragen der Teile aus dem Kanal damit ist noch ein weiteres Förderelement, nämlich eine Walze notwendig.

Der Erfindung liegt die Aufgabe zugrunde, eine Vorrichtung zum Vereinzeln von walzenförmigen Teilen anzugeben, bei der es mit einer einzigen Fördereinrichtung möglich ist, jeweils ein einziges Teil aus einer Behälteröffnung ausgegeben wird, ohne daß mehrere Teile diese Behälteröffnung "verstopfen", und bei der die Teile leicht mit einem weiteren Förderer ohne Beschädigungsgefahr weiter gehandhabt werden können.

Eine erfindungsgemäße Lösung dieser Aufgabe ist mit ihren Weiterbildungen in den Patentansprüchen gekennzeichnet.

Überraschenderweise kann diese Aufgabe dadurch gelöst werden, daß von einer Vorrichtung gemäß dem Oberbegriff des Patentanspruchs 1 ausgegangen wird, und diese Vorrichtung dadurch weitergebildet wird, daß die Fördereinrichtung einen intermittierenden Antrieb aufweist, die Neigung der Austrageinheit produktorientiert verstellbar ist, und auf den im Behälter befindlichen Stapel von walzenförmigen Teilen ein flexibles Teil gelegt ist, das an einer Stirnwand befestigt ist.

Die Austragöffnung kann aufgrund dieser Ausbildung nicht nur im Behälterboden, sondern bevorzugt auch seitlich angeordnet werden. Die Abmessungen der Austragöffnung sind so bemessen, daß durch sie jeweils ein einziges Teil ausgetragen werden kann. Eine derartige, in der Behälterseitenwand angeordnete und ausgebildete Austragöffnung ist in der Vergangenheit nicht in Betracht gezogen worden, da die in dem Stapel von walzenförmigen Teilen wirkenden horizontalen "Kraftkomponenten" in der Regel zwei oder mehr walzenförmige Teile "gleichzeitig" gegen die Öffnung pressen würden, so daß diese - nach allgemeiner Auffassung - zugesetzt würde.

Erfindungsgemäß ist jedoch erkannt worden, daß es durch die zum höchsten Punkt des Behälterbodens gerichtete Transportrichtung der Fördereinrichtung und die produktorientierte - d.h. in Zuordnung zur Form, dem Gewicht, den Reibwerten der Teile etc. erfolgende - Verstellbarkeit der der Neigung des Behälters möglich ist, zu verhindern, daß mehrere Teile "gleichzeitig" gegen die Öffnung gepreßt werden, so daß bei der erfindungsgemäßen Vorrichtung ohne Zusetzen der Austragöffnung immer ein walzenförmiges Teil ausgetragen wird:

Durch entsprechende Anpassung der Geschwindigkeit (Anspruch 4) und der Neigung kann u.a. die Austraggeschwindigkeit, d.h. die Zahl der pro Zeiteinheit ausgetragenen Walzen in einem gewissen Umfang gesteuert werden. Darüberhinaus kann durch diese Parameter die Gleichmäßigkeit des Austragvorgangs beeinflußt werden. Der erfindungsgemäße intermittierende Betrieb des Förderbandes kann u.a. dazu dienen, ungünstige Formen des Teile-Stapels bzw. durch außergewöhnliche Umstände hervorgerufenes Zusetzen der Austragöffnung zu beseitigen.

Durch die produktorientierte Verstellbarkeit der Neigung des Behälters, an dessen tiefster Stelle in einer Seitenwand sich die Austragöffnung befindet, werden die walzenförmigen Teile gegen die Stirnwand gedrückt, in der sich direkt über dem Behälterboden die Austragöffnung befindet. Andererseits wird durch die Bewegung des Förderbandes insbesondere die unterste Lage von walzenförmigen Teilen weg von der Austragöffnung gefördert. Diese durch das Förderband hervorgerufene Bewegung löst eventuell an der Austragöffnung "verklemmte" Teile-Ansammlungen immer wieder auf, so daß die Austragöffnung immer frei bleibt und bei entsprechender Bemessung der Fördergeschwindigkeit und der Neigung des Behälters das Austreten genau eines walzenförmigen Teils erlaubt.

Weiterhin erhält man eine das gleichmäßige Vereinzeln und Austragen besonders begünstigende Form des Walzenstapels, wenn man ein flexibles Teil auf den Walzenstapel legt. Dieses flexible Teil baut Teile-Ansammlungen im Bereich der Austragöffnung ab und "glättet" die Form des Schüttgut-"Kegels".

Die erfindungsgemäße Vorrichtung zum Vereinzeln von walzenförmigen Teilen hat damit den Vorteil, daß sie bei geringem baulichem Aufwand das gleichmäßige und schonende Vereinzeln und Austragen der Teile ermöglicht, ohne daß eine besondere Überwachung oder das Eingreifen von Bedienungspersonal erforderlich wäre. Darüberhinaus arbeitet sie weitgehend unabhängig von der speziellen Ausbildung der walzenförmigen Teile.

Weiterbildungen der Erfindung sind in den Unteransprüchen gekennzeichnet.

Das erfindungsgemäß vorgesehene flexible Teil kann nach Anspruch 2 eine an einer Behälterwand befestigte Kette sein.

Die erfindungsgemäße Vorrichtung zum Vereinzeln von walzenförmigen Teilen hat - wie bereits ausgeführt - den Vorteil, daß ihre Funktion nicht von einer speziellen Ausbildung oder speziellen Merkmalen der Teile abhängt. Diese Flexibilität der erfindungsgemäßen Vorrichtung wird durch die in den Ansprüchen 3 bis 7 gekennzeichneten Merkmale noch erhöht.

Gemäß Anspruch 3 ist zur Anpassung an die Form der zu vereinzelnden Teile die Größe der Austragöffnung und/oder die Breite des Behälters verstellbar. Hierdurch wird zum einen erreicht, daß genau eine Walze "durch die Austragöffnung paßt", zum anderen, daß die Walzen im dem Behälter parallel zu der Stirnwand, in der sich die Austragöffnung befindet, ohne Seitenversatz übereinander gestapelt sind. Damit erlaubt ein- und dieselbe Vorrichtung nach vergleichsweise einfacher Umrüstung das Austragen unterschiedlich geformter Teile.

Die gemäß Anspruch 5 vorgesehenen Sensoren können dazu dienen, die Form des Teile-Stapels und/oder die Austragöffnung zu überwachen. Die Informationen über die Form des Stapels können z.B. an eine Steuereinheit (Anspruch 6) angelegt werden, die entsprechend die Geschwindigkeit des Förderbandes verstellt und/oder die Neigung des Behälters ändert Ferner kann ein die Austragöffnung überwachender Sensor beispielsweise den intermittierenden Betrieb der Fördereinrichtung auslösen, wenn erkannt wird, daß sich die Austragöffnung beispielsweise aufgrund fehlerhafter walzenförmiger Teile zugesetzt hat. Die Ausbildung der Steuereinheit kann in der üblichen, in der Regelungstechnik eingeführten Weise erfolgen: Beispielsweise kann eine frei programmierbare Steuereinrichtung mit einem Mikroprozessor Verwendung finden.

Die Fördereinrichtung kann in der verschiedensten Art und Weise ausgebildet sein, beispielsweise kann sie aus einem umlaufenden mehrzinkigem Rechen bestehen. Besonders vorteilhaft ist es jedoch, wenn sie - wie im Anspruch 7 angegeben - ein Förderband aufweist.

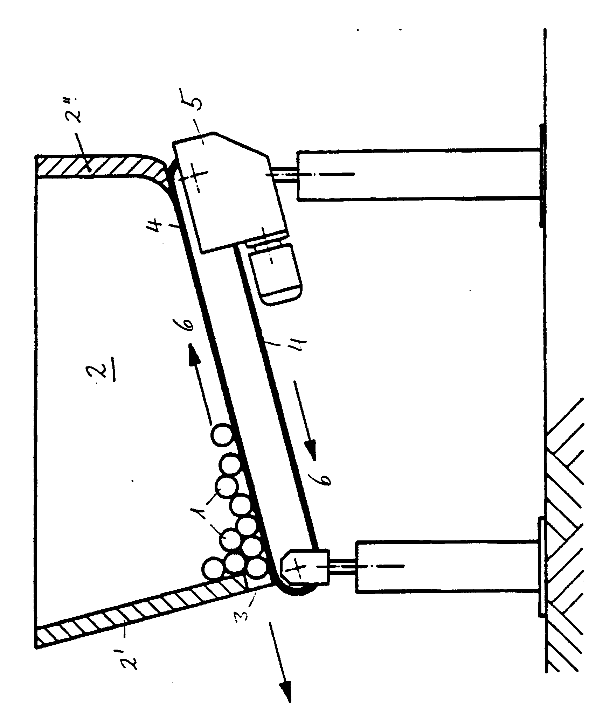

Die Erfindung wird nachstehend anhand eines Ausführungsbeispiels unter Bezugnahme auf die Zeichnung näher beschrieben,
deren einzige Figur einen Querschnitt durch eine erfindungsgemäße Vorrichtung zeigt.

Die erfindungsgemäße Vorrichtung zum Vereinzeln und Austragen von walzenförmigen Teilen 1 weist einen Behälter 2 auf, in dessen einer Stirnwand 2' sich direkt über dem Behälterboden eine Austragöffnung 3 befindet. Die Höhe der Austragöffnung ist geringfügig größer als der Durchmesser der zu vereinzelnden Teile 1, die Länge der Austragöffnung geringfügig größer als die Länge dieser Teile 1, so daß genau ein einziges Teil 1 durch die Öffnung 3 hindurchtreten kann.

Den Boden des Behälters 2 bildet wenigstens teilweise ein Förderband 4, das ein Antrieb 5 in Richtung der Pfeile 6 bewegt.

Der Behälter 2 ist auf höhenverstellbaren Stützen 7 bzw. 8 gelagert. Die Länge der Stützen ist so eingestellt, daß der Behälter schräg angeordnet ist und sich die Austragöffnung 3 am tiefsten Punkt des Behälters 2 befindet.

Die erfindungsgemäße Vorrichtung zum Vereinzeln von walzenförmigen Teilen arbeitet wie folgt:

Aufgrund der schrägen Anordnung des Behälters werden durch die Schwerkraft die walzenförmigen Teile 1 gegen die Stirnwand 2' des Behälters 2 gedrückt. Andererseits wird durch die Bewegung des Förderbands 4 in Richtung der Pfeile 6 die unterste Lage der Teile 1 ebenfalls in Richtung der Pfeile 6 "mitgenommen", also in Richtung auf die Stirnwand 2" transportiert. Wählt man die Geschwindigkeit des Förderbandes und/oder die Neigung des Behälters geeignet, so werden durch diese gegen die Schwerkraft von dem Förderband 4 erzwungene Bewegung die an der Stirnwand 2' anliegenden Teile 1 "laufend umgeschichtet" so daß TeileKonfigurationen, die das Durchtreten eines einzelnen Teils durch die Austragöffnung 3 verhindern würden, aufgelöst werden und laufend Teile-Konfigurationen entstehen, die das Durchtreten einer einzelnen Walze gestatten. Eine derartige Teile-Konfiguration ist in der Figur dargestellt.

Vorstehend ist die Erfindung anhand eines Ausführungsbeispiels ohne Beschränkung des allgemeinen Erfindungsgedankens - den Behälter schräg anzuordnen und den Boden durch eine Einrichtung zu ersetzen, die eine Bewegung der Teile gegen die Schwerkraftwirkung weg von der Austragöffnung erzwingt - beschrieben worden.

Innerhalb dieses vorstehend formulierten und insbesondere den Ansprüchen entnehmbaren allgemeinen Erfindungsgedankens sind selbstverständlich die verschiedensten Modifikationen möglich: Selbstverständlich kann anstelle eines als Fördereinrichtung verwendeten Förderbandes auch eine andere Einrichtung, beispielsweise ein Rechen etc verwendet werden.

Zusätzlich zur Neigung des Behälters kann auch die Geschwindigkeit der Fördereinrichtung produktorientiert verstellbar sein, so daß eine gleichmäßige Austragrate in der gewünschten Größenordnung erzielt wird. Die Verstellung einer oder beider vorgenannten Parameter kann auch durch eine Steuereinheit erfolgen, an der als Führungsgröße die Signale von Sensoren anliegen, die die Form des Teile-Stapels erfassen, und die solange einen oder beide Parameter verstellt, bis sich eine als optimal erkannte Form ergibt. In diesem Zusammenhang kann auch die Neigung der Stirnwand 2' gegen die Horizontale von Bedeutung sein.

Ferner kann ein Sensor die Austragöffnung 3 überwachen und dann, wenn sich tatsächlich einmal aufgrund außergewöhnlicher Umstände diese verstopfen sollte, beispielsweise den intermittierenden Betrieb der Fördereinrichtung auslösen. Die Steuereinheit kann aus handelsüblichen Komponenten aufgebaut sein, so daß sie aufgrund der vorstehenden Funktionsbeschreibung jederzeit realisierbar und eine Beschreibung ihres Aufbaus nicht erforderlich ist. Ferner ist es möglich, die Größe der Austragöffnung und/oder die Breite des Behälters einstellbar auszuführen, um walzenförmige Teil unterschiedlicher Größe vereinzeln und austragen zu können.

**Patentansprüche**

1. Vorrichtung zum Vereinzeln von walzenförmigen Teilen (1), mit einer Austrageinheit (2), die in einer Begrenzungswand (2') eine Austragöffnung (3) für die Teile (1) und in der anderen Begrenzungswand eine Fördereinrichtung (4) aufweist, deren Transportrichtung (6) zum höchsten Punkt des Behälterbodens gerichtet ist,

   **gekennzeichnet** durch die Kombination folgender Merkmale:
   - die Fördereinrichtung (4) weist einen intermittierenden Antrieb auf,
   - die Neigung der Austrageinheit (2) ist produktorientiert verstellbar,
   - auf den im Behälter (2) befindlichen Stapel von walzenförmigen Teilen (1) ist ein flexibles Teil gelegt, das an einer Stirnwand (2', 2") befestigt ist.

2. Vorrichtung nach Anspruch 1,
   dadurch **gekennzeichnet,** daß das flexible Teil eine an einer Behälterwand befestigte Kette ist.

3. Vorrichtung nach Anspruch 1 oder 2,
   dadurch **gekennzeichnet,** daß die Austragöffnung (3) und/ oder die Breite des Behälters verstellbar ist.

4. Vorrichtung nach einem der Ansprüche 1 bis 3,
   dadurch **gekennzeichnet,** daß die Geschwindigkeit der Fördereinrichtung (4) produktorientiert verstellbar ist.

5. Vorrichtung nach einem der Ansprüche 1 bis 4,
   dadurch **gekennzeichnet,** daß ein oder mehrere Sensoren vorgesehen sind, die die Form des Teile-Stapels erfassen.

6. Vorrichtung nach Anspruch 5,
   dadurch **gekennzeichnet,** daß die Ausgangssignale der Sensoren an eine Steuereinheit angelegt sind, die die Geschwindigkeit der Fördereinrichtung steuert und/oder die Neigung des Behälters verstellt.

7. Vorrichtung nach einem der Ansprüche 1 bis 5,
   dadurch **gekennzeichnet,** daß die Fördereinrichtung ein Förderband (4) ist.

**Claims**

1. Device for separating cylindrical pieces (1), comprising a discharge unit (2) including an opening (3) for discharging the pieces (1) in one defining wall (2') and a conveyor means (4) in the other defining wall, with the conveying sense being directed toward the highest point of the container bottom, **characterized** by the combination of the following features:

- the conveyor means (4) is provided with an intermittently operating drive,
- the inclination of said discharge unit (2) is adjustable in consideration of the product,
- an elastic part is placed on top of the stack of cylindrical pieces (1) contained in said container (2), which part is secured at a face wall (2', 2").

2. Device according to Claim 1, **characterized** in that said elastic part is a chain secured to a container wall.

3. Device according to Claim 1 or 2, **characterized** in that said discharge opening (3) and/or the width of the container are adjustable.

4. Device according to any of Claims 1 to 3, **characterized** in that the speed of said conveyor means (4) is adapted for product-oriented adjustment

5. Device according to any of Claims 1 to 4, **characterized** in that one or more sensors are provided to detect the shape of the stack of pieces.

6. Device according to Claim 5, **characterized** in that the output signals of said sensors are supplied to a controller unit for control of the speed of said conveyor means and/or for adjustment of the inclination of the container.

7. Device according to any of Claims 1 to 5, **characterized** in that said conveyor means is a conveyor belt (4).

**Revendications**

1. Dispositif pour la séparation de pièces cylindriques (1), avec une unité de décharge (2) comportant dans une paroi (2') une ouverture de décharge (3) des pièces (1) et dans l'autre paroi un dispositif convoyeur (4), dont la direction de transport (6) est orientée vers le point le plus élevé du fond du réservoir, **caractérisé** par la combinaison des caractéristiques

suivantes:

- le dispositif convoyeur (4) comporte un entraînement intermittent,
- l'inclinaison de l'unité de décharge (2) est réglable en fonction du produit,
- un élément flexible, fixé à une paroi latérale (2', 2"), est placé sur l'empilement de pièces cylindriques (1) qui se trouve dans le réservoir.

2. Dispositif selon la revendication 1, **caractérisé** en ce que l'élément flexible est une chaîne fixée à une paroi du réservoir.

3. Dispositif selon la revendication 1 ou 2, **caractérisé** en ce que l'ouverture de décharge (3) et/ou la largeur du réservoir est réglable.

4. Dispositif selon l'une des revendications 1 à 3, **caractérisé** en ce que la vitesse du dispositif convoyeur (4) est réglable en fonction du produit.

5. Dispositif selon l'une des revendications 1 à 4, **caractérisé** en ce que un ou plusieurs capteurs sont prévus, qui détectent la forme de l'empilement de pièces.

6. Dispositif selon la revendication 5, **caractérisé** en ce que les signaux de sortie des capteurs sont appliqués à une unité de contrôle, qui commande la vitesse du dispositif convoyeur et/ou l'inclinaison du réservoir.

7. Dispositif selon l'une des revendications 1 à 5, **caractérisé** en ce que le dispositif convoyeur est un transporteur à bande (4).